# EUROPÄISCHE PATENTSCHRIFT

(11) **EP 0 721 633 B1**
(45) Veröffentlichungstag und Bekanntmachung des Hinweises auf die Patenterteilung: **05.03.1997**
(21) Anmeldenummer: 94927485.6
(22) Anmeldetag: 23.09.1994
(51) Int. Cl.: G06T 7/20

(54) **PROZESSOR ZUM VERGLEICH VON BILDPUNKT-BLÖCKEN (BLOCK-MATCHING-PROZESSOR)**
PROCESSOR FOR COMPARING BLOCKS OF PICTURE ELEMENTS (BLOCK MATCHING PROCESSOR)
PROCESSEUR DE COMPARAISON DE BLOCS DE POINTS D'IMAGE (PROCESSEUR D'APPARIEMENT DE BLOCS)

(30) Priorität: 30.09.1993 DE 4333476
(43) Veröffentlichungstag der Anmeldung: 17.07.1996
(73) Patentinhaber: SIEMENS AKTIENGESELLSCHAFT, 80333 München (DE)
(72) Erfinder: DE VOS, Luc, D-81541 München (DE); SCHÖBINGER, Matthias, D-81825 München (DE)
(86) Internationale Anmeldenummer: DE9401113
(87) Internationale Veröffentlichungsnummer: WO9509404

(56) Entgegenhaltungen:
- EP-A- 0 395 293
- IEEE TRANSACTION ON CIRCUITS AND SYSTEMS; VOL. 36, NO. 10, OCT.89, PAGES 1309-1316; L. de Vos et al.: "Parameterizable VLSI architectures for the full-search block matching algorithm"

## Beschreibung

Prozessoren dieser Art im Bereich der Bewegungsschätzung in einer Vielzahl von Anwendungen eingesetzt, wie z. B. bei der Hybrid-Codierung zur Videokompression oder bei einer bewegungskompensierten Interpolation. Dabei ist eine flexible Lösung wünschenswert, um verschiedene Verfahren aber auch unterschiedliche Parameterkombinationen unterstützen zu können. Beispiele hierfür sind unter anderem Unterabtastung im Verschiebungsfeld, Untersuchung von sogenannten Kanditat-Vektoren, Pixeldezimierung und Berechnungen mit Subpixelgenauigkeit.

Allzweck-Digitalsignalprozessoren oder flexible Videoprozessoren sind in der Regel weder für die erforderlichen Rechenleistungen noch für die nötigen I/O-Bandbreiten ausgelegt.

Die hierfür erforderlichen hohen Rechenleistungen können mit zweidimensionalen Zellenfeldern erbracht werden. Da externe Daten in diesem Falle jedoch nur über den Zellenfeldrand zugeführt werden können, kann die hohe verfügbare Rechenleistung im allgemeinen nur unvollständig ausgeschöpft werden, woraus in der Regel erhebliche Auslastungsverluste resultieren.

Bislang wurden hohe Auslastungen, von beispielsweise bis zu 100 %, von genannten zweidimensionalen Zellenfeldern nur bei dedizierten Implementierungen von auf einer vollständigen Suche basierenden Block-Matching-Algorithmen erreicht.

In der Veröffentlichung IEEE Transactions on Circuits and Systems, Vol. 36, No. 10, October 1989, Seiten 1309 bis 1316 ist eine parameterisierbare VLSI-Architektur für einen Block-Matching-Algorithmus, der auf einer vollständigen Suche basiert, näher erläutert.

Bei einer nicht vollständigen Suche, d. h. wenn nicht alle innerhalb eines jeweiligen Suchbereiches möglichen Verschiebungsvektoren untersucht werden, wird dann nur eine Untermenge der berechneten Resultate benötigt. Durch eine flexible Auswahl der relevanten Ergebnisse oder der zu betrachtenden Prozessorelemente im Zellenfeld kann zwar ein auf einer unvollständigen Suche basierender Block-Matching-Algorithmus realisiert werden, dies geschieht jedoch auf Kosten betrachtlicher Einbußen in der effektiven Auslastung der Prozessorschaltung.

Aus der europäischen Patentanmeldung 0 395 293 A1 ist eine Bewegungsschätzungseinrichtung mit Vergleichsprozessoren bekannt, bei der unter anderem ein minimaler Verschiebevektor ermittelt wird.

Die der Erfindung zugrundeliegende Aufgabe besteht nun darin, einen Prozessor zum Vergleich von Bildpunkt-Blöcken (Block-Matching-Prozessor) mit einem zweidimensionalen Zellenfeld anzugeben, der auch bei Block-Matching-Algorithmen die auf einer unvollständigen Suche basieren eine möglichst hohe Hardware-Ausnutzung bietet.

Diese Aufgabe wird erfindungsgemäß durch die Merkmale des Patentanspruchs 1 gelöst.

Die Gegenstände der Patentansprüche 2 bis 7 sind auf bevorzugte Ausgestaltungen der Erfindung gerichtet.

Die Erfindung wird anhand der Zeichnung näher erläutert. Dabei zeigt:
- Figur 1: ein Diagramm zur Erläuterung einer unvollständigen Suche,
- Figur 2: ein Blockschaltbild eines erfindungsgemäßen Prozessors mit einem zweidimensionalen Zellenfeld,
- Figur 3: ein Detailschaltbild eines in Figur 2 enthaltenen Zellenfeldes und
- Figur 4: ein Detailschaltbild eines in Figur 3 enthaltenen Prozessorelements.

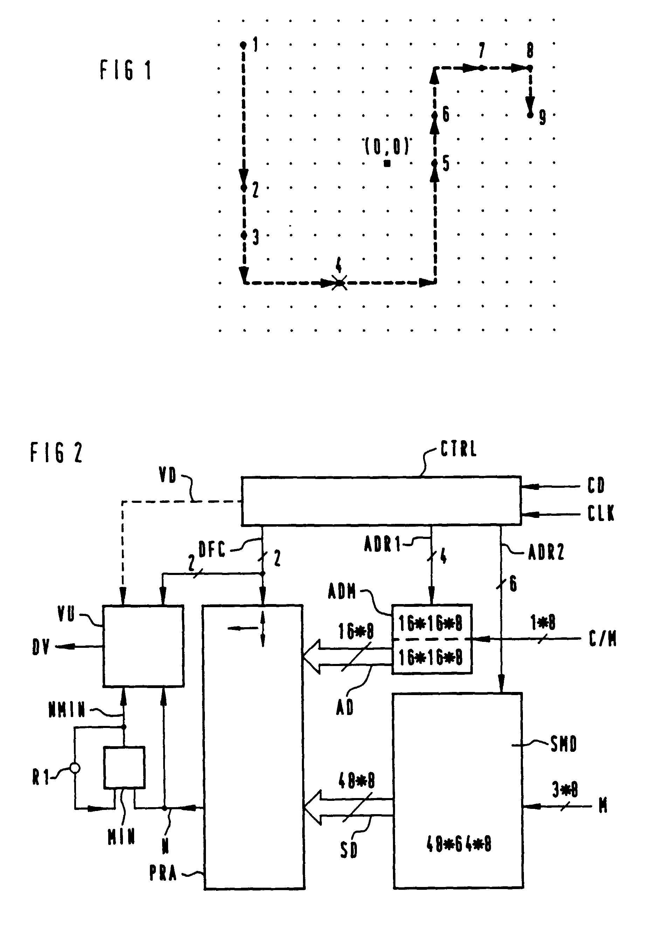

Figur 1 zeigt ein Beispiel eines Verschiebungsfeldes mit 11∗13=143 möglichen Verschiebungen, die als Punkte dargestellt sind, und mit einer Verschiebung 0,0 als Mittelpunkt. Für einen auf einer unvollständigen Suche basierenden Block-Matching-Algorithmus werden nicht, wie bei der vollständigen Suche, alle Verschiebungen benötigt, sondern nur die in Figur 1 als fett gezeichnete Punkte dargestellte Verschiebungen 1...9. Mit einem konventionellen Prozessor, also bei einer vollständigen Suche mit anschließender Auswahl der benötigten Verschiebungen würden hier 11∗13=143 Berechnungen durchgeführt, obwohl davon hier beispielsweise nur 9 gebraucht werden.

Durch einen erfindungsgemäßen Prozessor hingegen ist ein, in Figur 1 mit fett gezeichneten gestrichelten Pfeilen angegebener, mäanderförmiger Datenfluß möglich, wobei die Anzahl der erforderlichen Berechnungen von 143 auf 34 reduziert werden kann. Die effektive Auslastung des Zellenfeldes steigt somit von 6 % auf 26 % an.

Wie in IEEE Transactions on Circuit and Systems, Vol. 36, No. 10, October 1989, Seite 1309 bis 1316 näher erläutert, sind Prozessoren mit einem Zellenfeld vom Typ 1 oder vom Typ 2 möglich, wobei das Zellenfeld vom Typ 1 eine globale Akkumulation und das Zellenfeld vom Typ 2 eine lokale Akkumulation bewirkt.

Der erfindungsgemäße Prozessor kann prinzipiell ein Zellenfeld vom Typ 1 oder aber auch ein Zellenfeld vom Typ 2 aufweisen, wobei das Zellenfeld vom Typ 1 im Falle einer unvollständigen Suche in der Regel eine bessere Hardware-Ausnutzung bietet.

In Figur 2 ist ein Blockschaltbild eines erfindungsgemäßen Prozessors zum Vergleich von Bildpunkt-Blöcken dargestellt, der ein Prozessor/Register-Zellenfeld PRA, einen Suchbereich-Speicher SDM, einen Block-Speicher ADM, eine Steuereinheit CTRL und ggf. zusätzlich eine Einheit VU zur Bildung eines wahrscheinlichen Verschiebungsvektors DV und eine Minimumbildungs-Einheit MIN mit einem Rückkoppelregister R1 aufweist. In Figur 2 sind beispielhaft die Wortbreiten und Speicherdimensionierungen für einen aktuellen Bildpunkt-Block mit 16∗16 Bildpunkten und einen Suchbereich von 48∗48 Bildpunkten angegeben. Der Block-Speicher ADM für Daten eines aktuellen Bildpunkt-Blocks erhält entweder direkt von einer Kamera oder von einem externen Bildspeicher pro Systemtakt CLK beispielsweise 8 Bit für einen Bildpunkt, die einem Grauwert oder einem Farbwert entsprechen. Der Block-Speicher ADM besteht aus zwei identischen Einheiten die jeweils, wie der Bildblock aus Zeilen und Spalten zu je 16 Bildpunkten, wobei pro Bildpunkt 8 Bit vorgesehen sind. Diese Einheiten werden im Wechselbetrieb für das Einlesen der Daten in den Block-Speicher und für das Auslesen der Daten in das Prozessor/Register-Zellenfeld PRA verwendet. Am Ausgang des Block-Speichers ADM kann pro Systemtakt parallel eine Spalte mit hier 16 ∗ 8 Bit als aktuelle Daten AD in das Prozessor/Register-Zellenfeld PRA ausgelesen werden. Jeweils in 16 Systemtakten kann aus dem externen Bildspeicher eine vollständige Spalte des aktuellen Bildpunkt-Blocks in den Block-Speicher ADM eingelesen werden.

Da der Suchbereich hier beispielsweise 48 Zeilen und 48 Spalten aufweist und eine Spalte des Suchbereichspeichers SDM gleichzeitig mit einer Spalte des Block-Speichers ADM geladen sein muß, werden dem Suchbereich-Speicher SDM von einem externen Bildspeicher M pro Systemtakt 3∗8 Bit zugeführt, wodurch nach jeweils 16 Systemtakten eine Spalte des Suchbereiches mit hier 48∗8 Bit in den Suchbereichs-Speicher SDM eingelesen werden kann. Am Ausgang des Suchbereichs-Speichers SDM kann pro Systemtakt parallel eine Spalte mit hier 48 ∗ 8 Bit als Suchbereichsdaten in das Prozessor/Registerfeld PRA eingelesen werden. Der Suchbereichspeicher SDM weist hierbei eine Organisation von 48∗64∗8 Bit auf, da sich jeweils zwei aufeinanderfolgende Suchbereiche in einem Bereich von 48∗32 Bit überlappen und aus einem Block von 48∗48 Bildpunkten jeweils gelesen und in einem Block von 16∗48 Bildpunkten jeweils geschrieben wird. Erfindungswesentlich ist hierbei, daß sobald der Suchbereichspeicher SDM vollständig mit Daten beschrieben ist, innerhalb eines jeweiligen Suchbereiches jede beliebige Verschiebung innerhalb von maximal 16 Systemtakten durch Nachladen entsprechender Spalten aus dem Suchbereichs-speicher in das Prozessor/Register-Zellenfeld möglich ist. Die Verschiebungen erfolgen horizontal nur in Richtung Zellenfeld-Ausgang und vertikal sowohl nach unten als auch nach oben.

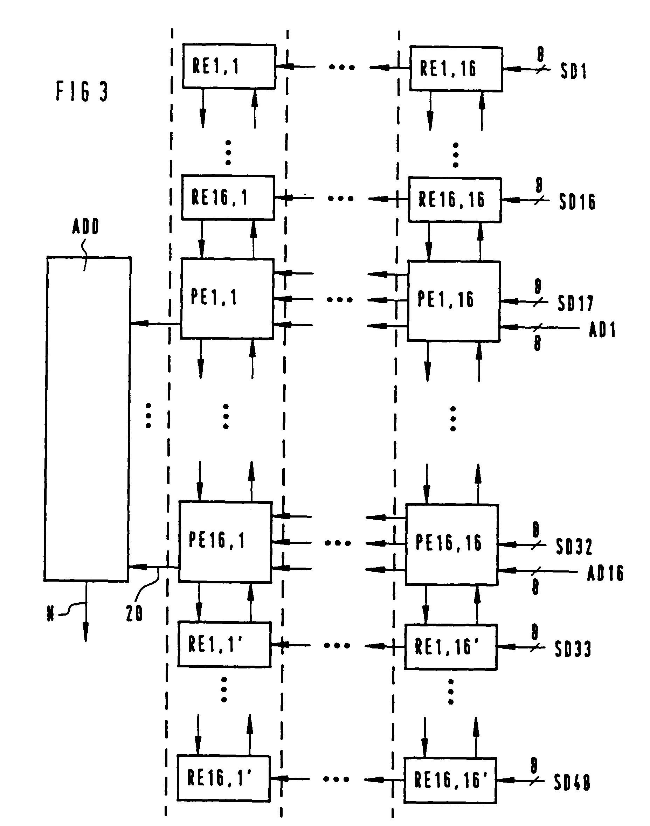

In Figur 3 ist beispielhaft ein Prozessor/Register-Zellenfeld PRA für eine globale Akkumulation detailiert dargestellt. Vorteilhafter Weise ist pro Bildpunkt des aktuellen Bildpunkt-Blocks eine Prozessoreinheit, also im Beispiel von 16∗16 Bildpunkten Prozessoreinheiten PE1,1... PE16,16 vorgesehen. Da eine Suchbereichspalte hier 48 Bildpunkte umfaßt, wird jede Spalte von Prozessoreinheiten nach oben hin durch 16 Register und nach unten hin durch 16 Register ergänzt. Die erste Spalte des in Figur 3 dargestellten Prozessor/Register-Zellenfeldes besteht somit von oben nach unten aus 16 Registern RE1,1.. RE16,1, 16 Prozessoreinheiten PEI,1..PE16,1 und 16 weiteren Registereinheiten RE1,1'...RE16,1'. Die weiteren Spalten des Prozessor/Register-Zellenfeldes sind entsprechend organisiert, wobei die letzte Spalte aus 16 Registereinheiten RE1,16..RE16,16, 16 Prozessoreinheiten PE1,16..PE16,16 und aus weiteren 16 Registereinheiten 1,16'..RE16,16' besteht. Den Registereinheiten RE1,16..RE16,16 werden jeweils 8 Bit breite Ausgangsdaten SD1. SD16, den Prozessoreinheiten PE1,16..PE16,16 die jeweils 8 Bit breiten Ausgangsdaten SD17..SD32 des Suchbereichspeichers SDM und den Registereinheiten RE1,16'..RE16,16' die jeweils zum Beispiel 8 Bit breiten Ausgangsdaten SD33..SD48 des Suchbereichspeichers SDM parallel zugeführt.Zur weiteren Verbesserung der Auslastung ist auch eine Einrichtung zur zyklischen Permutation der zugeführten Daten denkbar, um reine Verschiebeoperationen im Prozessor/Register-Zellenfeld zu vermeiden. Den Prozessoreinheiten PE1,16..PE16,16 sind darüberhinaus jeweils, mit zum Beispiel 8 Bit breiten, Ausgangsdaten AD1..AD16 des Blockspeichers ADM versorgt. Die Prozessoreinheiten der 16. Spalte können dabei Suchbereichsdaten und aktuelle Daten für Zwischenergebnisse an die 15. Spalte usw. übergeben bis die Zwischenergebnisse der ersten Spalte über Zwischenergebnisausgänge, beispielsweise ZO, an eine Addiereinrichtung ADD übergeben werden.

Die Addiereinrichtung ADD besteht dabei beispielsweise aus einem binären Addiererbaum, das heißt hier in der ersten Ebene 8 Addierer, in der zweiten Ebene 4, in der dritten Ebene 2 und in der vierten Ebene 1 Addierer. Am Ausgang Addiereinrichtung ADD wird dabei die Betragssummen-Norm N aus Differenzen aus den Daten für den aktuellen Bildpunkt-Block und den Daten von Bildpunkten des durch den Suchbereich begrenzten Teil des Vergleichsbildes gebildet.

Entsprechend wie die Prozessoreinheiten können die Registereinheiten der 16. Spalte RE1,16..RE16,16' Daten an Registereinheiten der 15. Spalte usw. übergeben bishin zu den Registereinheiten RE1,1..RE16,1'. Zwischen den Registereinheiten und Prozessoreinheiten bzw. Registereinheiten und Registereinheiten ist ein bidirektionaler Datentransport möglich, wobei während eines Systemtakts Daten jeweils um eine Zeile weiter gegeben werden.

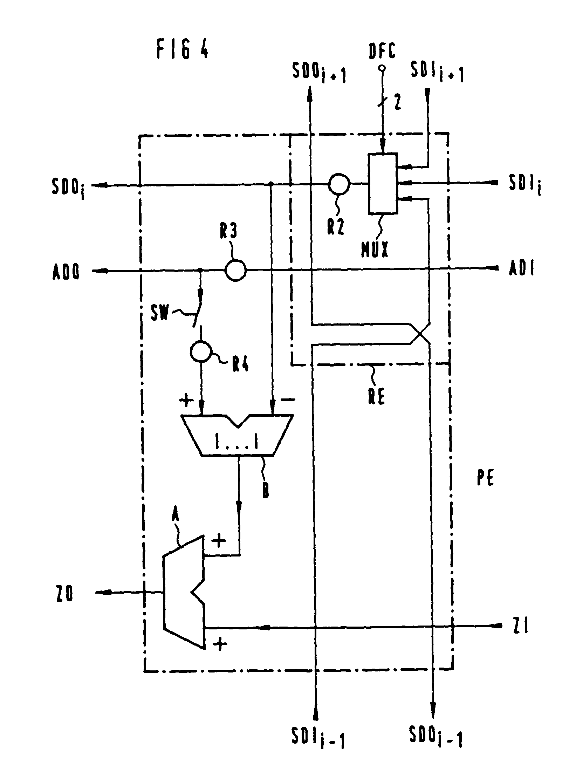

Die Figur 4 zeigt ein Detailschaltbild einer Prozessoreinheit PE, wobei die Prozessoreinheit PE selbst auch eine Registereinheit RE beinhaltet. Eine Registereinheit RE besteht aus einem Multiplexer MUX und einem nachgeschalteten Register R2, dessen Ausgang gleichzeitig Suchbereichsdaten Ausgangssignale SDOᵢ der Registereinheit RE bzw. der Prozessoreinheit PE liefert. Abhängig von einem 2 Bit breiten Datenfluß-Steuersignal DFC werden Suchbereichsdaten Eingangssignale SDIᵢ₊₁ und SDIᵢ₋₁ der Nachbarzeilen sowie ein Suchbereichsdaten- Eingangssignal SDIᵢ einer in Datenflußrichtung vorhergehenden Nachbarspalte wahlweise auf den Eingang des Registers R2 durchgeschaltet. Der Ausgang des Registers R2 liefert Suchbereichsdaten-Ausgangssignale SDOᵢ₊₁ und SDO für Registereinheiten in Nachbarzellen sowie eines Suchbereichsdaten-Ausgangssignal SDOᵢ für eine Registereinheit einer in Datenflußrichtung nachfolgenden Spalte des Zellenfeldes. Ein Eingangssignal ADI für Daten eines aktuellen Bildpunktblocks wird in der Prozessoreinheit PE über ein Register R3 zum jeweiligen Ausgang weitergeleitet, wobei am Ausgang der Prozessoreinheit PE ein Ausgangssignal ADO für Daten eines aktuellen Bildpunktblocks anliegen.

Neben der Registereinheit RE enthält die Prozessoreinheit PE einen Schalter SW, ein Register R4, eine Subtrahier-Betragsbildung-Einheit B und eine Summationseinheit A. Während der Verarbeitung eines Blocks ist der Schalter SW geöffnet und die im Pufferregister R4 gespeicherten Daten eines aktuellen Bildpunkt-Blocks liegen am Plus-Eingang der Subtrahier/Betragsbildungs-Einheit B an. Erst wenn neuer Block geladen wird, wird der Schalter SW geschlossen und das Pufferregister R4 mit Daten eines neuen aktuellen Bildpunkt-Blocks geladen. Das Pufferregister R4 dient mehr zur Entkopplung und ist je nach schaltungstechnischer Ausführung der Prozessoreinheit ggf. nicht erforderlich. Der Minus-Eingang der Subtrahier/Betragsbildungs-Einheit ist mit dem Signal SDOᵢ versorgt und der Ausgang der Subtrahier/Betragsbildungs-Einheit mit einem Eingang der Additionseinheit A verbunden, deren zweiter Eingang mit einem Eingangssignal für ein Zwischenergebnis einer in Datenflußrichtung vorhergehenden Spalte des Zellenfeldes versorgt ist und deren Ausgang ein Ausgangssignal ZO für eine in Datenflußrichtung nachfolgende Spalte liefert.

Ein Prozessor/Register-Zellenfeld für eine lokale Akkumulation ist ähnlich wie in Figur 3 dargestellt aufgebaut, wobei die wesentlichen Unterschiede darin bestehen, daß zwischen Prozessoreinheiten keine Zwischenergebnisse weitergeleitet, sondern in dieser selbst weiter verarbeitet werden und über einen weiteren Multiplexer entweder die Norm am Ausgang der Addiereinheit A des jeweiligen Prozessorelements oder Normen von in Datenflußrichtung vorhergehenden Prozessorelementen als Norm N an den Ausgang des Zellenfeldes PRA gelangen.

Die Steuereinheit CTRL besteht vorteilhafterweise aus einem Schieberegister, das durch den Systemtakt CLK getaktet und durch externe Steuerdaten CD im Inhalt frei programmiert ist. Alternativ zum Schieberegister oder vergleichbar organisierten anderen Schreib/Lese-Speichern ist prinzipiell auch eine Steuereinheit auf der Basis eines Festwertspeichers denkbar. Die Steuereinheit muß dabei so geartet sein, daß in ihr eine Steuersequenz speicherbar ist, die pro Systemtakt CLK parallel Datenfluß-Steuersignale DFC, eine Adresse ADR1 zur Adressierung des Blockspeichers und eine weitere Adresse ADR2 zur Adressierung des Suchbereichspeichers liefert.

Sollen im Prozessor nicht nur Betragssummenormen N sondern ein wahrscheinlicher Verschiebevektor DV berechnet werden, so ist im Prozessor zusätzlich die Einheit MIN zur Feststellung eines Minimums sowie zusätzlich die Einheit VU zur Bildung eines wahrscheinlichen Verschiebevektors DV vorgesehen. Das Ausgangssignal der Einheit MIN ist dabei über ein Register R1 auf einen Eingang der Einheit MIN zurückgeführt und der weitere Eingang der Einheit MIN ist mit den Betragssummennormen N des Prozessor/Register-Zellenfeldes versorgt.

Je nach Ausführung der Einheit VU kann, entweder mit Hilfe der Datenfluß-Steuersignale DFC der Steuereinheit CTRL oder, in Figur 2 gestrichelt angedeutet, mit Hilfe von zusätzlich in der Steuereinheit CTRL gespeicherten Ausgangssignalen VD der Steuereinheit, der wahrscheinliche Verschiebungsvektor DV in der jeweiligen Einheit VU gebildet werden. Die zusätzlichen Ausgangssignale VD können dabei in Vektordaten selbst oder aber in Adressen von Vektordaten bestehen.

Werden nur die Datenfluß-Steuersignale DFC zur Bildung des Verschiebevektors DV herangezogen, so enthält die Einheit VU für jede Komponente des wahrscheinlichen Verschiebevektors DV einen Zähler, der positive oder negtive Zählimpulse durch die Datenfluß-Steuersignale DFC erhalten kann und dem jeweils ein Halteglied nachgeschaltet ist, in das der am Ausgang der Zähler anliegende, jeweilige Verschiebungsvektor gespeichert ist, sofern eine jeweilige Betragssummen-Norm N einer jeweiligen minimalen Norm NMIN entspricht.

Für den Fall, daß die zusätzlichen Ausgangssignale VD der Steuereinheit CTRL in Vektoradressen bestehen, so ist in der Einheit VU kein Zähler, sondern ein Vektorspeicher vorgesehen, der durch die Vektoradressen adressiert ist. Ferner ist in der Einheit VU für jede Komponente des Verschiebevektors ein Halteglied vorgesehen, in dem die jeweilige Komponente des Verschiebevektors gespeichert ist, sofern eine jeweilige Betragssummen-Norm N einer jeweiligen Norm NMIN entspricht.

Besteht das zusätzliche Ausgangssignal VD der Steuereinheit aus den jeweiligen Verschiebungsvektor selbst, so wird der jeweilige Verschiebevektor in Halteglieder als wahrscheinlicher Verschiebevektor übernommen, sofern eine jeweilige Betragssummen-Norm N einer jeweiligen minimalen Norm NMIN entspricht.

Eine vorteilhafte Ausgestaltung des erfindungsgemäßen Prozessors ergibt sich dadurch, daß der Prozessor zusammen mit den Speichern ADM und SDM auf einem Halbleiterchip monolithisch integriert ist.

## Patentansprüche

1. Prozessor zum Vergleich von Bildpunkt-Blöcken (Block-Matching-Prozessor),
bei dem ein Block-Speicher (ADM) für Daten zweier aktueller Bildpunkt-Blöcke, ein Suchbereichs-Speicher (SDM) für Daten von Bildpunkten eines Vergleichsbildes, wobei ein jeweiliger Suchbereich aus Zeilen und Spalten besteht, ein zweidimensionales Prozessor/Register-Zellenfeld (PRA) und eine Steuereinheit (CTRL) vorgesehen sind,
bei dem der Suchbereichs-Speicher in seiner Wortbreite so organisiert ist, daß das Prozessor/Register-Zellenfeld pro Systemtakt (CLK) jeweils mit Daten von Bildpunkten einer vollständigen Spalte des jeweiligen Suchbereiches parallel versorgt ist,
bei dem im Prozessor/Register-Zellenfeld zur Abstandsberechnung Betragssummen-Normen (N) aus Differenzen aus den Daten für den aktuellen Bildpunkt-Block und den Daten von Bildpunkten des durch den jeweiligen Suchbereich begrenzten Teil des Vergleichsbildes gebildet sind, wobei aus einer jeweiligen Differenz deer Betrag gebildet wird und die Beträge aufsummiert werden,
**dadurch gekennzeichnet**,
daß der Suchbereichs-Speicher Daten von zwei Suchbereichen enthält, wobei die beiden Suchbereiche einander horizontal überlappen, um bei einem Suchbereichswechsel ein Nachladen des Prozessor/Register-Zellenfeldes zu verkürzen,
daß in der Steuereinheit eine Steuersequenz gespeichert ist, die pro Systemtakt (CLK) parallel Datenfluß-Steuersignale (DFC), eine Adresse (ADR1) zur Adressierung des Block-Speichers, eine weitere Adresse (ADR2) zur Adressierung des jeweiligen Suchbereichs-Speichers liefert,
daß die Steuereinheit (CTRL) durch externe Steuerdaten (CD) programmiert ist und
daß ein durch den Systemtakt (CLK) getaktetes Schieberegister vorgesehen ist, in das durch die Steuerdaten (CD) eine vom jeweiligen Vergleichsverfahren (Block-Matching-Algorithmus) abhängige, flexible Steuersequenz eingeschrieben ist, die die Ausgangssignale (DFC ADR1,ADR2 gegebenenfalls VD) der Steuereinheit derart erzeugt , daß nur ein vom jeweiligen Vergleichsverfahren abhängiger Teil aller prinzipiell möglichen Verschiebungen zwischen dem aktuellen Bildpunkt-Block und Blöcken des Suchbereiches des Vergleichsbildes verglichen wird (unvollständige Suche).

2. Prozessor nach Anspruch 1,
bei dem dem Prozessor/Register-Zellenfeld eine Einheit (MIN) zur Feststellung eines Minimums nachgeschaltet ist, in der aus den Betragssummen-Normen (N) eine minimale Norm (NMIN) ermittelt ist,
bei dem zusätzlich eine Einheit (VU) zur Bildung eines wahrscheinlichen Verschiebungsvektors (DV) vorgesehen ist,
bei dem aus einem Teil von Ausgangssignalen (DFC bzw. VD) der Steuereinheit (CTRL) der wahrscheinliche Verschiebungsvektor (DV) erzeugt ist, wenn die Betragssummen-Norm (N) der minimalen Norm (NMIN) entspricht.

3. Prozessor nach Anspruch 2,
bei dem die Einheit (VU) zur Bildung des Verschiebevektors (DV) für jede Komponente des Verschiebungsvektors einen Zähler enthält, der Zählimpulse durch die Datenfluß-Steuersignale (DFC) erhält,
und bei dem den Zählern jeweils ein Halteglied nachgeschaltet ist, in das der am Ausgang der
Zahler anliegende, jeweilige Verschiebungsvektor gespeichert ist, sofern eine jeweilige Betragssummen-Norm (N) einer jeweiligen minimalen Norm (NMIN) entspricht.

4. Prozessor nach Anspruch 2,
bei dem in der Einheit (VU) zur Bildung des Verschiebevektors (DV) ein Vektorspeicher vorgesehen ist, der durch einen Teil der Ausgangssignale (VD) der Steuereinheit adressiert ist und
bei dem die Einheit (VU) zur Bildung des Verschiebevektors (DV) für jede Komponente des Verschiebevektors ein Halteglied enthält, in das der jeweilige Verschiebevektor gespeichert ist, sofern eine jeweilige Betragssummen-Norm (N) einer jeweiligen minimalen Norm (NMIN) entspricht.

5. Prozessor nach Anspruch 2,
bei dem in der Einheit (VU) zur Bildung des Verschiebungsvektors (DV) direkt mit einem Teil der Ausgangssignale (VD) der Steuereinheit versorgt ist, wobei der Teil der Ausgangssignale dem jeweiligen Verschiebungsvektor selbst entspricht und
bei dem die Einheit (VU) zur Bildung des Verschiebevektors (DV) für jede Komponente des Verschiebevektors ein Halteglied enthält, in das der jeweilige Verschiebevektor gespeichert ist, sofern eine jeweilige Betragssummen-Norm (N) einer jeweiligen minimalen Norm (NMIN) entspricht.

6. Prozessor nach einem der vorhergehenden Ansprüche, bei dem der Prozessor auf einem Halbleiterchip monolithisch integriert ist.

## Claims

1. Processor for comparison of pixel blocks (block matching processor),
in which a block memory (ADM) for data from two current pixel blocks, a search area memory (SDM) for data from pixels from a comparison image, a respective search area comprising lines and columns, a two-dimensional processor/register cell field (PRA) and a control unit (CTRL) being provided
in which the word length of the search area memory is organized such that the processor/register cell field is in each case supplied per system clock cycle (CLK) with data from pixels from a complete column of the respective search area in parallel,
in which total magnitude norms (N) from differences from the data for the current pixel block and the data from pixels of that part of the comparison image which is bounded by the respective search area are formed in the processor/register cell field in order to calculate distances, the magnitude being formed from a respective difference and the magnitudes being added up,
characterized
in that the search area memory contains data from two search areas, the two search areas overlapping one another horizontally, in order to shorten reloading of the processor/register cell field in the event of a search area change,
in that a control sequence is stored in the control unit, which control sequence supplies, per system clock cycle (CLK), data flow control signals (DFC), an address (ADR1) for addressing the block memory, and a further address (ADR2) for addressing the respective search area memory, in parallel,
in that the control unit (CTRL) is programmed by external control data (CD), and
in that a shift register is provided which is pulsed by the system clock (CLK) and into which a flexible control sequence is written by the control data (CD), which flexible control system depends on the respective comparison method (block matching algorithm) and produces the output signals (DFC ADR1, ADR2, possibly VD) from the control unit such that only a part, which is dependent on the respective comparison method, of all the shifts which are possible in principle is compared between the current pixel block and blocks in the search area of the comparison image (incomplete search).

2. Processor according to Claim 1,
in which a unit (MIN) for detecting a minimum is connected downstream of the processor/register cell field, in which unit (MIN) a minimum norm (NMIN) is determined from the total magnitude norms (N),
in which a unit (VU) for forming a probable displacement vector (DV) is additionally provided,
in which the probable displacement vector (DV) is produced from some of the output signals (DFC or VD) from the control unit (CRTL) when the total magnitude norm (N) corresponds to the minimum norm (NMIN).

3. Processor according to Claim 2,
in which the unit (VU) for forming the displacement vector (DV) contains a counter for each component of the displacement vector, which counter receives counting pulses by means of the data flow control signals (DFC),
and in which a hold element is connected downstream of each of the counters, into which hold element the respective displacement vector which is present at the output of the counter is stored, provided a respective total magnitude norm (N) corresponds to a respective minimum norm (NMIN).

4. Processor according to Claim 2,
in which a vector memory is provided in the unit (VU) for forming the displacement vector (DV), which vector memory is addressed by some of the output signals (VD) from the control unit, and
in which the unit (VU) for forming the displacement vector (DV) contains a hold element for each component of the displacement vector, into which hold element the respective displacement vector is stored, provided a respective total magnitude norm (N) corresponds to a respective minimum norm (NMIN).

5. Processor according to Claim 2,
in which the unit (VU) for forming the displacement vector (DV) is supplied directly with some of the output signals (VD) from the control unit, some of the output signals corresponding to the respective displacement vector itself, and
in which the unit (VU) for forming the displacement vector (DV) contains a hold element for each component of the displacement vector, into which hold element the respective displacement vector is stored, provided a respective total magnitude norm (N) corresponds to a respective minimum norm (NMIN).

6. Processor according to one of the preceding claims,
in which the processor is monolithically integrated on a semiconductor chip.

## Revendications

1. Processeur de comparaison de blocs de points d'image (processeur d'appariement de blocs),
dans lequel une mémoire de blocs (ADM) pour des données de deux blocs de points d'image actuels, une mémoire de zones de recherche (SDM) pour données de points d'image d'une image de comparaison, une zone de recherche étant composée de lignes et de colonnes, un champ cellulaire de processeur/registre (PRA) bidimensionnel et une unité de commande (CTRL) étant prévue,
dans lequel la mémoire de zone de recherche est organisée dans la largeur de ses mots de telle sorte que le champ cellulaire de processeur/registre soit alimenté en parallèle pour chaque cadence du système (CLK) par des données de point d'image d'une colonne complète de la plage de recherche correspondante,
dans lequel dans le champ cellulaire de processeur/registre des normes de montants totaux (N) sont formées pour le calcul des espacements à partir de différences provenant des données pour le bloc de points d'image actuel et des données de points d'image de la partie de l'image de comparaison limitée par la zone de recherche correspondante, le montant étant formé à partir d'une différence respective et les montants étant additionnés,
**caractérisé en ce que**,
la mémoire de zones de recherche contient des données de deux zones de recherche, les deux zones de recherche se recouvrant à l'horizontale l'une et l'autre, pour raccourcir un rechargement du champ de processeur/registre en cas de changement de zone de recherche, en ce qu'une séquence de commande est mémorisée dans l'unité de commande, qui fournit par cycle du système (CLK) des signaux de commande de circulation des données en parallèle (DFC), une adresse (ADR1) pour l'adressage de la mémoire de blocs, une adresse supplémentaire (ADR2) pour l'adressage de la mémoire de la zone de recherche correspondante, en ce que l'unité de commande (CTRL) est programmée par des données de commande extérieures (CD) et
en ce qu'un registre à décalage cadencé par la cadence du système (CLK) est prévu, dans lequel, par l'intermédiaire des données de commande (CD), une séquence de commande souple et dépendante de la méthode de comparaison utilisée (algorythme d'appariement de blocs) est inscrite, qui génère les signaux de sortie (DFC ADR1, ADR2 le cas échéant VD) de l'unité de commande, de telle sorte que seule une partie dépendante de la méthode de comparaison de tous les décalages possibles par principe entre le bloc de points d'image actuel et les blocs de la zone de recherche de l'image de comparaison est comparée (recherche incomplète).

2. Processeur selon la revendication 1,
dans lequel une unité (MIN) est installée en aval du champ cellulaire de processeur/registre pour la constatation d'un minimum, dans laquelle une norme minimale (NMIN) est calculée à partir des normes des montants totaux (N).
dans lequel une unité (VU) est en outre prévue pour la formation d'un vecteur de décalage probable (DV),
dans lequel à partir d'une partie des signaux de sortie (DFC resp. VD) de l'unité de commande (CTRL) le vecteur de décalage probable (DV) est généré, lorsque la norme des montants totaux (N) correspond à la norme minimale (NMIN).

3. Processeur selon la revendication 2,
dans lequel l'unité (VU) contient un compteur pour la formation du vecteur de décalage (DV) pour chaque composant du vecteur de décalage, qui reçoit des impulsions de comptage à partir des signaux de commande de la circulation des données (DFC),
et dans lequel un élément d'arrêt est installé en aval des compteurs, dans lequel le vecteur de décalage respectif présent à la sortie des compteurs est mémorisé, dans la mesure où une norme des montants totaux (N) correspond à une norme minimale (NMIN).

4. Processeur selon la revendication 2,
dans lequel une mémoire vectorielle pour la formation du vecteur de décalage (DV), est prévue dans l'unité (VU) lequel est adressé par une partie des signaux de sortie (VD) de l'unité de commande et
dans lequel l'unité (VU) servant à la formation du vecteur de décalage (DV) comporte un élément d'arrêt pour chaque composant du vecteur de décalage, dans lequel le vecteur de décalage correspondant est mémorisé, dans la mesure où une norme de montants totaux (N) correspond à une norme minimale (NMIN).

5. Processeur selon la revendication 2,
dans lequel l'approvisionnement s'accomplit directement dans l'unité (VU) pour la formation du vecteur de décalage (DV) avec une partie des signaux de sortie (VD) de l'unité de commande, le partie des signaux de sortie correspondant au vecteur de décalage correspondant et
dans lequel l'unité (VU) comporte un élément d'arrêt pour chaque composant du vecteur de décalage pour la formation d'un vecteur de décalage (DV), dans lequel le vecteur de décalage correspondant est mémorisé, dans la mesure où une norme des montants totaux (N) correspond à une norme minimale (NMIN).

6. Processeur selon l'une des revendications précédentes dans lequel le processeur est intégré de manière monolithique dans une puce à semiconducteurs.
